(19)

**Europäisches Patentamt**

**European Patent Office**

**Office européen des brevets**

(11) **EP 4 060 775 A1**

(12) **EUROPÄISCHE PATENTANMELDUNG**

(43) Veröffentlichungstag:
21.09.2022 Patentblatt 2022/38

(21) Anmeldenummer: 22156854.6

(22) Anmeldetag: 15.02.2022

(51) Internationale Patentklassifikation (IPC):
$H01M\ 8/04313$ (2016.01)    $H01M\ 8/04694$ (2016.01)
$C25B\ 1/04$ (2021.01)    $C25B\ 9/13$ (2021.01)
$C25B\ 11/031$ (2021.01)    $C25B\ 15/023$ (2021.01)
$C25B\ 15/027$ (2021.01)    $C25B\ 15/08$ (2006.01)
$H01M\ 8/083$ (2016.01)    $H01M\ 8/18$ (2006.01)

(52) Gemeinsame Patentklassifikation (CPC):
H01M 8/04313; C25B 1/04; C25B 9/13;
C25B 11/031; C25B 15/023; C25B 15/027;
C25B 15/08; H01M 8/04694; H01M 8/083;
H01M 8/18; H01M 2250/20

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **19.03.2021 DE 102021106854**

(71) Anmelder: **Airbus Defence and Space GmbH
82024 Taufkirchen (DE)**

(72) Erfinder:
• **JEHLE, Walter
82024 Taufkirchen (DE)**
• **ECK, Thomas
97845 Neustadt (DE)**
• **FREMDLING, Fabian
88046 Friedrichshafen (DE)**

(74) Vertreter: **LKGLOBAL
Lorenz & Kopf PartG mbB Patentanwälte
Brienner Straße 11
80333 München (DE)**

(54) **ELEKTROCHEMISCHE ZELLE ZUR BEREITSTELLUNG ODER ZUM VERBRAUCH EINER GASKOMPONENTE UND VERFAHREN ZUR BEREITSTELLUNG ODER ZUM VERBRAUCH EINER GASKOMPONENTE**

(57) Die Erfindung betrifft eine elektrochemische Zelle (1) zur Bereitstellung oder zum Verbrauch einer Gaskomponente (31, 32). Die elektrochemische Zelle (1) umfasst einen Elektrolytaufnahmebereich (10), einen Elektrodenbereich (20) und einen Gasaufnahmebereich (30). Der Elektrolytaufnahmebereich (10) ist dazu ausgeführt, einen Elektrolyt (13) einschließlich eines Edukts aufzunehmen, sodass der Elektrolyt (13) dem Elektrodenbereich (20) zuführbar oder aus dem Elektrodenbereich (20) abführbar ist. Der Elektrodenbereich (20) hat Hohlräume (26), die dazu ausgeführt sind, aus dem Elektrolytaufnahmebereich (10) zugeführten Elektrolyt (13) oder in den Elektrolytaufnahmebereich (10) abführbaren Elektrolyt (13) aufzunehmen. Ein Kontakt (14) zwischen dem Elektrolyt (13) und einer Elektrodenoberfläche (27) innerhalb der Hohlräume (26) des Elektrodenbereichs (20) führt zur Bildung einer dem Gasaufnahmebereich (30) zuführbaren Gaskomponente (31, 32) oder zum Verbrauch einer aus dem Gasaufnahmebereich (30) abgeführten Gaskomponente (31, 32). Die elektrochemische Zelle (1) weist auch ein Steuermittel (40) auf, welches dazu ausgeführt ist, ein Elektrolytverhalten innerhalb der Hohlräume (26) des Elektrodenbereichs (20) zu beeinflussen. Es ist ferner ein Verfahren zur Bereitstellung einer Gaskomponente (31, 32) vorgesehen.

Fig. 1

## Beschreibung

### Gebiet der Erfindung

Die vorliegende Erfindung betrifft elektrochemische Zellen mit Matrixaufbau. Insbesondere betrifft die Erfindung eine elektrochemische Zelle zur Bereitstellung oder zum Verbrauch einer Gaskomponente sowie ein Verfahren zur Bereitstellung oder zum Verbrauch einer Gaskomponente.

### Hintergrund der Erfindung

Bei alkalischen und PEM (Polymer-Elektrolytmembran)-Elektrolyseuren erfolgt eine Produktgasabscheidung üblicherweise in Form einer externen Gasabscheidung. Einen dedizierten Bereich für Versorgungswasser bzw. Elektrolyt gibt es nicht, wodurch Wasserbzw. Elektrolytraum gleich Gasraum ist. Bei Brennstoffzellen verhält es sich ähnlich, mit der Ausnahme, dass der Gasanteil deutlich überwiegt. Um den Anteil an Elektrolyt gering zu halten, ist eine externe Wasserabscheidung vorgesehen. Sowohl bei Elektrolyseuren wie auch bei Brennstoffzellen ist für die Abscheidung eine Zirkulation von Elektrolyt nötig.

Es kann ein Elektrolyseur vorgesehen sein, bei dem der Wasser- bzw. Elektrolytraum und der Gasraum voneinander getrennt sind, wodurch sich die Elektroden passiv über Kapillareffekte mit Wasser versorgen. Dies hat jedoch durch eine verringerte Elektrolytmenge auch Nachteile, vor allem im Hinblick auf thermische oder diffusive Effekte, was insbesondere die Systemeffizienz beeinträchtigen kann.

EP 2 463 407 B1 und US 2013 / 0 313 126 A1 beschreiben ein Elektrolyseverfahren mit einer Elektroden-Membran-Elektroden-Anordnung, die zwei poröse Elektroden mit einer porösen Zwischenmembran oder mit einer Ionenaustauschmembran umfasst. Der flüssige Elektrolyt wird dabei direkt in die Elektroden-Membran-Elektroden-Anordnung geführt.

### Zusammenfassung der Erfindung

Es ist eine Aufgabe der vorliegenden Erfindung, die Effizienz von Systemen bei der elektrolytischen Bereitstellung von Gaskomponenten oder beim Verbrauch von Gaskomponenten zu verbessern.

Diese Aufgabe wird durch den Gegenstand der unabhängigen Ansprüche gelöst. Beispielhafte Ausführungsformen ergeben sich aus den abhängigen Ansprüchen und der nachfolgenden Beschreibung.

Gemäß einem Aspekt ist eine elektrochemische Zelle zur Bereitstellung oder zum Verbrauch einer Gaskomponente angegeben. Die elektrochemische Zelle kann Teil eines Systems zur elektrolytischen Bereitstellung von Gaskomponenten sein. Beispielsweise kann die elektrochemische Zelle eine Elektrolysezelle oder eine Brennstoffzelle sein. Die elektrochemische Zelle umfasst einen Elektrolytaufnahmebereich, einen Elektrodenbereich und einen Gasaufnahmebereich. Der Elektrolytaufnahmebereich ist dazu ausgeführt, einen Elektrolyt, der beispielsweise ein Edukt aufweist, aufzunehmen, sodass der Elektrolyt einschließlich des Edukts dem Elektrodenbereich zuführbar oder der Elektrolyt aus dem Elektrodenbereich in den Elektrolytaufnahmebereich abführbar ist. Beim elektrochemischen Prozess verbrauchtes Edukt kann wiederum dem Elektrolytaufnahmebereich zugeführt werden, beispielsweise über eine externe Eduktzufuhr. Der Elektrodenbereich weist Hohlräume auf, die dazu ausgeführt sind, aus dem Elektrolytaufnahmebereich zugeführten Elektrolyt oder in den Elektrolytaufnahmebereich abführbaren Elektrolyt aufzunehmen, wobei ein Kontakt zwischen dem Elektrolyt und einer Elektrodenoberfläche innerhalb der Hohlräume des Elektrodenbereichs zur Bildung einer dem Gasaufnahmebereich zuführbaren Gaskomponente führt oder zum Verbrauch einer aus dem Gasaufnahmebereich abgeführten Gaskomponente führt. Die elektrochemische Zelle umfasst ferner ein Steuermittel, welches dazu ausgeführt ist, ein Elektrolytverhalten innerhalb der Hohlräume des Elektrodenbereichs zu beeinflussen.

Mittels der erfindungsgemäßen elektrochemischen Zelle ist es möglich, die Gasbildung durch Elektrolyse oder die Gasaufnahme bei einem Brennstoffzellenbetrieb innerhalb der Hohlräume des Elektrodenbereichs, das heißt der Elektrode, zu verbessern. Insbesondere kann erfindungsgemäß das Elektrolytverhalten innerhalb der Hohlräume der Elektrode so beeinflusst werden, dass der für die elektrochemische Reaktion erforderliche Kontakt zwischen Elektrodenoberfläche und Elektrolyt vergrößert wird und gleichzeitig der Gastransport aus den Hohlräumen in den Gasaufnahmebereich oder umgekehrt verbessert wird. Mit anderen Worten kann durch das Steuermittel das Verhalten des Elektrolyts einschließlich des Edukts innerhalb der Hohlräume so gesteuert werden, dass eine Benetzung der Elektrodenoberfläche in den Hohlräumen verbessert und damit der für die elektrochemische Reaktion erforderliche Kontakt zwischen dem flüssigen Elektrolyt und der Elektrodenoberfläche vergrößert wird und gleichzeitig der Abtransport des erzeugten Gases, hier auch als Gaskomponente bezeichnet, erleichtert wird.

Die erfindungsgemäße elektrochemische Zelle und das hierin ebenfalls beschriebene erfindungsgemäße Verfahren zur Bereitstellung einer Gaskomponente sehen zum Beispiel eine Steuerung bzw. Regelung der Hohlraumfüllung innerhalb des Elektrodenbereichs vor. Ebenso ist eine spezifische Auslegung einer zwischen Elektrolytaufnahmebereich und Elektrodenbereich angeordneten Membran, welche hierin auch als Diaphragma bezeichnet wird, vorgesehen, um die genannten vorteilhaften Wirkungen bei der Elektrolyse zu erreichen. Der im folgenden beschriebene Aufbau sowie die erläuterten Eigenschaften der elektrochemischen Zelle führen im Allgemeinen zu einem breiteren Betriebsbereich der Zelle, einer höheren Effizienz bei der Bereitstellung der Gaskomponente sowie zu einer Gewichtsersparnis.

Die elektrochemische Zelle kann eine sog. Matrixzelle sein, die zur Bereitstellung einer Gaskomponente ausgeführt ist. Die hergestellte Gaskomponente kann Wasserstoff, Sauerstoff, usw. sein. Der verwendete Elektrolyt kann beispielweise eine Kaliumhydroxidlösung ($KOH + H_2O$) sein. Die elektrochemische Zelle kann Bestandteil eines regenerativen Brennstoffzellensystems sein.

Mittels der erfindungsgemäßen elektrochemischen Zelle kann ferner eine verbesserte Systemkenntnis bereitgestellt werden, beispielsweise durch entsprechend in der Zelle platzierte Messinstrumente. Durch die gesteigerte Systemkenntnis können wiederum die zulässigen Betriebsgrenzen der Zelle voll ausgeschöpft oder erweitert werden, was eine deutliche Effizienzerhöhung mit sich bringt. Des Weiteren kann im Brennstoffzellenbetrieb der Bedarf an Zusatzkomponenten und Energie zur Zirkulation reduziert oder sogar ganz vermieden werden.

Der Elektrolytaufnahmebereich ist dazu ausgeführt, den Elektrolyt aufzunehmen, zum Beispiel zusammen mit einem Edukt in Form von Wasser. Der Elektrolytaufnahmebereich kann eine abgeschlossene Kammer sein, die von einer oder zwei angrenzenden Elektroden und Begrenzungswänden definiert ist. Beim elektrochemischen Prozess in der elektrochemischen Zelle verbrauchtes Edukt kann dem Elektrolytaufnahmebereich beispielsweise über eine externe Elektrolytzufuhr bzw. Eduktzufuhr zugeführt werden, so dass verbrauchter Elektrolyt bzw. verbrauchtes Edukt im Elektrolytaufnahmebereich stets wieder aufgefüllt werden kann.

Der Elektrodenbereich kann durch eine Elektrode gebildet werden. Die elektrochemische Zelle kann insbesondere zwei Elektrodenbereiche, das heißt zwei Elektroden, aufweisen. Im Folgenden werden die erfindungsgemäßen Prinzipien anhand einer Elektrode bzw. einem Elektrodenbereich beschreiben, wobei diese Prinzipien grundsätzlich auch für die elektrochemische Zelle mit zwei Elektroden bzw. zwei Elektrodenbereichen gelten, wie es in der Figurenbeschreibung noch genauer ersichtlich wird.

Der Elektrodenbereich umfasst Hohlräume, beispielsweise Poren, die im gesamten Elektrodenbereich verteilt angeordnet sein können. Diese Hohlräume können miteinander verbunden sein, zum Beispiel durch kleine kanalartige Strukturen und somit den Elektrodenbereich in einer quasi netzartigen Struktur durchziehen. Mit anderen Worten weist der Elektrodenbereich eine poröse Struktur auf. Die Hohlräume sind derart ausgestaltet, dass eine Flüssigkeit, insbesondere der Elektrolyt in die Hohlräume eindringen kann. Dabei können Kapillarkräfte wirken, die den Elektrolyt vom Elektrolytaufnahmebereich und ggf. durch die zwischen dem Elektrolytaufnahmebereich und dem Elektrodenbereich angeordnete Membran in die Hohlräume hineinziehen bzw. ansaugen. Das heißt, der Elektrodenbereich weist eine Kapillarität auf, wobei während des Elektrolysebetriebs Elektrolyt einschließlich Edukt selbsttätig nachgesaugt wird. Abhängig vom Porendurchmesser und dem Kontaktwinkel kann die Saugkraft unterschiedlich stark sein. Für die Effizienz der elektrochemischen Zelle hat jedoch die Porenfüllung die dominierende Wirkung, wobei die Porenfüllung zum Beispiel ein Maß für das Volumen von im Elektrodenbereich befindlichen Elektrolyt im Verhältnis zum Hohlraumgesamtvolumen im Elektrodenbereich ist. Der Zusammenhang zwischen Kapillardruck $p_C$ und Hohlraumfüllung bzw. Porenfüllung $S_b$ kann beschrieben werden durch die Brooks-Corey-Beziehung, wobei $1/\alpha$ der sog. "Pore Size Distribution Index" und $p_{C,0}$ der maximale Kapillardruck bei leerer Pore ist:

$$p_C(S_b) = p_{C,0} \times S_b^{-\alpha}$$

Im Elektrodenbereich wird die Gaskomponente erzeugt, und zwar im Kontaktbereich zwischen Elektrolyt und Elektrodenoberfläche in den Hohlräumen. Die Elektrodenoberfläche kann eine Art Grenzfläche zwischen dem Elektrodenmaterial des Elektrodenbereichs und den Hohlräumen des Elektrodenbereichs bilden. Durch Benetzung, das heißt Kontakt, zwischen dem in den Hohlräumen befindlichen Elektrolyt und der Elektrodenoberfläche kann die Gaskomponente als Produktgas erzeugt werden. Insbesondere durch Anlegen einer ausreichenden Spannung an der elektrochemischen Zelle wird an der Elektrodenoberfläche mit Elektrolytkontakt das Produktgas erzeugt, welches anschließend durch die poröse Struktur, das heißt die Hohlräume im Elektrodenbereich, in den Gasaufnahmebereich abgeführt wird.

Die Gasabfuhr spielt eine wesentliche Rolle für die Effizienz der elektrochemischen Zelle. Für einen effizienten Abtransport der Gaskomponente aus den Hohlräumen des Elektrodenbereichs ist es von Vorteil, wenn möglichst wenig flüssiger Elektrolyt in den Hohlräumen anwesend ist. Demgegenüber ist es allerdings erforderlich, dass ausreichend Elektrodenoberfläche mit Elektrolyt benetzt ist, also ausreichend aktive Oberfläche für den Elektrolysevorgang zur Verfügung steht. Der Zusammenhang zwischen Porenfüllung und aktiver Oberfläche ist dabei von einem Benetzungswinkel des Elektrolyts zur Elektrodenoberfläche abhängig.

Das Steuermittel ist nun dazu ausgeführt, das Elektrolytverhalten, beispielsweise ein Benetzungsverhalten des Elektrolyts auf der Elektrodenoberfläche zu beeinflussen, das heißt zu steuern. Diese Steuerung kann dazu führen, dass viel Elektrodenoberfläche benetzt ist und gleichzeitig die erzeugte Gaskomponente leicht abgeführt werden kann. Das Steuermittel kann eine aktive Steuerung, beispielsweise eine Druckregelung, oder aber eine passive Steuerung, beispielsweise eine Einstellung von Materialeigenschaften bzw. einer Materialbeschaffenheit des Elektrodenbereichs und/oder eine Einstellung der Zusammensetzung der Elektrolytlösung, vorsehen. Dies wird im weiteren Verlauf noch genauer erläutert werden.

Gemäß einer Ausführungsform korrespondiert das Elektrolytverhalten mit einer Füllung der Hohlräume des Elektrodenbereichs mit dem Elektrolyt.

Die Füllung beschreibt die Hohlraum- bzw. Porenfüllung mit Elektrolyt. Das kann bedeuten, dass die Füllung den Volumenanteil der mit Elektrolyt gefüllten Hohlräume im Elektrodenbereich relativ zum Gesamtvolumen der Hohlräume definiert. Somit ist das Steuermittel dazu ausgeführt, die Hohlraumfüllung zu steuern, sodass möglichst gute Benetzungsbedingungen an der Elektrodenoberfläche vorliegen, aber gleichzeitig auch gute Gasabfuhrbedingungen im Elektrodenbereich gegeben sind. Das Steuermittel kann also die Füllung der Hohlräume des Elektrodenbereichs regulieren, beispielsweise durch eine Druckregulierung mittels einer Druckdifferenz über den Elektrodenbereich, das heißt zwischen dem Elektrolytaufnahmebereich und dem Gasaufnahmebereich.

Gemäß einer Ausführungsform ist das Steuermittel ein passives Steuermittel, das mit einer Materialbeschaffenheit der Elektrodenoberfläche innerhalb der Hohlräume des Elektrodenbereichs korrespondiert.

Hierdurch kann eine Verteilung der partiellen Kontaktflächen, das heißt der mit Elektrolyt in Kontakt stehenden Elektrodenoberflächen, gesteuert werden, zusammen oder nicht zusammen mit der Steuerung der Hohlraumfüllung. Eine Steuerung kann beispielsweise über die Einstellung eines Kontaktwinkels erfolgen, der für die Benetzung der Elektrodenoberfläche charakteristisch ist. Es kommt insbesondere eine Hydrophilierung der Elektrode, beispielsweise durch Mikrostrukturierung in Frage. Bei in der Elektrolyse häufig eingesetztem Nickel als Elektrodenmaterial kann dies durch Ätzen der Elektrodenoberfläche in den Hohlräumen mit Schwefelsäure erreicht werden. Eine Hydrophobierung kann dagegen zur besseren Gasabfuhr, wie auch zur Reduktion des Elektrolytaustrags eingesetzt werden. Über die Auswahl des Materials der Elektrode kann ebenfalls eine Steuerung der Benetzung erfolgen. Die Einstellung der Materialbeschaffenheit kann so erfolgen, dass ein Benetzungswinkel des Elektrolyts auf der Elektrodenoberfläche verkleinert wird.

Gemäß einer Ausführungsform ist das Steuermittel ein passives Steuermittel, das einen Druckunterschied zwischen dem Elektrolytaufnahmebereich und dem Gasaufnahmebereich reguliert.

Der Druckunterschied kann hier passiv gesteuert werden, beispielsweise durch einen definierten Strömungswiderstand in der Elektrolytzufuhr von dem Elektrolytaufnahmebereich in den Elektrodenbereich oder durch einen Widerstand in der Gasabfuhr vom Elektrodenbereich in den Gasaufnahmebereich. Ferner kann die passive Steuerung des Strömungswiderstands auch durch eine Materialauswahl im Elektrodenbereich erfolgen. Um unterschiedliche Druckverhältnisse und damit Hohlraumfüllungen zwischen Zellen zu vermeiden, kann eine zellspezifische Anpassung der Widerstände vor allem bei waagrechter Ausrichtung der gestapelten elektrochemischen Zellenanordnung vorgesehen sein.

Die Druckverhältnisse können in Abhängigkeit der Gaskomponentenströme und damit dem elektrischen Elektrodenstrom gesteuert werden. Damit kann vermieden werden, dass es bei niedrigen Strömen zu einer Überversorgung mit Elektrolyt kommt, während bei hohen Strömen die Elektrolytversorgung kritisch fallen kann. Zum Einsatz kommen kann dabei eine einfache Steuerung der Druckverhältnisse, gleichermaßen können aber auch komplexe Modelle ermittelt werden, die auch eine stetige Optimierung des Betriebspunktes, also eine Regelung der Zellspannung erlauben.

Es können auch diskontinuierliche Konzepte vorgesehen sein. Zum Beispiel kann ein für den Betriebspunkt zu hoher minimaler Pumpenförderstrom vorgesehen sein, so dass ein vergleichsweise hoher Druck im Elektrolytaufnahmebereich vorliegt. Hier kann das Elektrolytspeichervolumen der Elektrode gezielt genutzt werden, also die Elektroden auch aktiv befüllt werden, ohne dass es zu einem Elektrolytverlust in den Produktgasstrom kommt, wobei aktiv bedeutet, dass der Elektrolytzufluss bzw. Eduktzufluss in die elektrochemische Zelle größer ist als die Menge des verbrauchten Elektrolyts. Mit anderen Worten kann der Druckunterschied zwischen dem Elektrolytaufnahmebereich und dem Gasaufnahmebereich durch den Elektrolytstrom in den Elektrolytaufnahmebereich reguliert werden.

Gemäß einer Ausführungsform ist das Steuermittel ein Additiv, das zusammen mit dem Elektrolyt dem Elektrodenbereich zuführbar oder zusammen mit dem Elektrolyt aus dem Elektrodenbereich abführbar ist.

Mit anderen Worten bewirkt hier das Steuermittel eine Einstellung der Eigenschaften des Elektrolyts. Mit Hilfe von Additiven können Anpassungen erzielt werden, wobei mehrere Optionen für die Verwendung von Additiven vorgesehen sein können, die einzeln oder beliebig kombiniert eingesetzt werden können.

Ein Beispiel sind Oberflächenadditive zur Reduktion des Kontaktwinkels mit der Elektrodenoberfläche, was eine bessere Benetzung bzw. Ausnutzung der aktiven Elektrodenoberfläche in den Hohlräumen und auch eine verbesserte Gasabfuhr bewirkt. Ein Beispiel für ein Oberflächenadditiv ist polyethermodifiziertes Polydimethylsiloxan.

Ein weiteres Beispiel sind sog. Entlüfter zur Verschmelzung mehrerer kleinerer Gasblasen zu einer großen, was zu einer frühzeitigeren Ablösung der erzeugten Gaskomponente von aktiven Elektrodenoberflächen und damit zur Steigerung einer kontinuierlichen Benetzung führt. Entlüfter sind zum Beispiel silikonfreie schaumzerstörende Polymere.

Ein weiteres Beispiel sind sog. Entschäumer zur schnelleren Beseitigung der für die Gasabfuhr hinderlichen Flüssigkeitsschichten. Beispiele für Entschäumer sind Mischungen aus schaumzerstörenden Polysiloxanen und hydrophoben Feststoffen (z.B. Kieselsäuren und Polyharnstoffe).

Ein weiteres Beispiel sind viskositätsändernde Additive zur Bereitstellung von entlüftenden Eigenschaften im Elektrodenbereich sowie auch eine Reduktion von Druckverlusten, beispielsweise durch eine Wasserverteilschicht. Viskositätsändernde Additive können zur gezielteren Durchmischung von frischem Edukt und fixiertem Elektrolyt verwendet werden, was gleichmäßigere Elektrolytkonzentrationen begünstigt. Ein viskositätsänderndes Additiv ist zum Beispiel Polyacrylsäure.

Gemäß einer Ausführungsform weist die elektrochemische Zelle ferner eine Membranstruktur auf, welche zwischen dem Elektrolytaufnahmebereich und dem Elektrodenbereich angeordnet ist und dazu ausgeführt ist, den Elektrolyt vom Elektrolytaufnahmebereich zum Elektrodenbereich zu transportieren oder den Elektrolyt vom Elektrodenbereich zum Elektrolytaufnahmebereich zu transportieren.

Die Membranstruktur kann auch als Diaphragma bezeichnet werden und kann ebenfalls als passives Steuermittel verwendet werden, indem sie beispielsweise eine Elektrolytzufuhr vom Elektrolytaufnahmebereich in den Elektrodenbereich oder umgekehrt reguliert. Diese Regulierung kann auch ortsabhängig sein.

Gemäß einer Ausführungsform umfasst die elektrochemische Zelle eine Erfassungseinheit. Die Erfassungseinheit ist dazu ausgeführt, eine Elektrolytfüllung der Hohlräume des Elektrodenbereichs zu bestimmen und ein entsprechendes Messsignal zu erzeugen. Zusätzlich oder alternativ ist die Erfassungseinheit dazu ausgeführt, eine Temperatur des Elektrolyts zu bestimmen und ein entsprechendes Messsignal zu erzeugen.

Die Erfassungseinheit kann eine Impedanzmesseinheit zur Messung einer Zellimpedanz der elektrochemischen Zelle aufweisen. Durch eine Impedanzmessung kann die Hohlraumfüllung im Elektrodenbereich bestimmt werden. Das erzeugte Messsignal kann repräsentativ für die gemessene Hohlraumfüllung sein. Repräsentativ für die gemessene Hohlraumfüllung kann auch jedes beliebige andere Messsignal sein, das eine Änderung der Zellimpedanz anzeigt oder, wenn die Zellimpedanz für einen Messwert eine charakteristische Eigenfrequenz aufweist. Das Messsignal kann anschließend an eine Steuerung, übertragen werden, wobei die Steuerung Bestandteil des Steuermittels sein kann.

Die Erfassungseinheit kann zusätzlich oder alternativ einen Temperatursensor aufweisen, welcher eine Temperatur des Elektrolyts, beispielsweise im Elektrolytaufnahmebereich oder in der Membranstruktur misst. Durch eine Temperaturmessung kann die Betriebstemperatur der elektrochemischen Zelle überwacht und ggf. anschließend reguliert werden. Das erzeugte Messsignal kann also repräsentativ für eine gemessene Temperatur des Elektrolyts sein. Auch dieses Messsignal kann anschließend an die Steuerung übertragen werden, wobei die Steuerung Bestandteil des Steuermittels sein kann.

Die Erfassungseinheit kann ferner einen Drucksensor umfassen. Beispielsweise kann ein erster Drucksensor im Elektrolytaufnahmebereich angeordnet sein und ein zweiter Drucksensor kann im Gasaufnahmebereich angeordnet sein. Dadurch kann eine Druckdifferenz zwischen dem Elektrolytaufnahmebereich und dem Gasaufnahmebereich gemessen und über ein entsprechend erzeugtes Messsignal über die Steuerung gesteuert werden.

Gemäß einer Ausführungsform ist das Steuermittel dazu ausgeführt, das Elektrolytverhalten, insbesondere eine Hohlraumfüllung oder eine Benetzung, innerhalb der Hohlräume des Elektrodenbereichs basierend auf dem von der Erfassungseinheit erzeugten Messsignal zu beeinflussen.

Dies kann, wie schon angedeutet, über die Steuerung erfolgen. Die Steuerung kann eine Verarbeitungseinheit bzw. einen Prozessor umfassen, der die Messsignale auswertet und basierend darauf eine aktive Steuerung der Hohlraumfüllung durchführt, beispielsweise durch Einstellung einer Druckdifferenz zwischen dem Elektrolytaufnahmebereich und dem Gasaufnahmebereich.

Gemäß einem Aspekt ist ein Fahrzeug mit der zuvor und nachfolgend beschriebenen elektrochemischen Zelle zur Bereitstellung oder zum Verbrauch einer Gaskomponente angegeben.

Gemäß einer Ausführungsform ist das Fahrzeug ein Luftfahrzeug mit der zuvor und nachfolgend beschriebenen elektrochemischen Zelle. Das Luftfahrzeug kann ein bemanntes oder ein unbemanntes Luftfahrzeug sein. Das Luftfahrzeug kann ein Flugzeug, insbesondere ein Transportflugzeug bzw. ein Passagierflugzeug sein. Das Luftfahrzeug kann aber auch ein beliebiger anderer Flugkörper sein.

Gemäß einer weiteren Ausführungsform ist die zuvor und nachfolgend beschriebene elektrochemischen Zelle dazu ausgeführt, in einer stationären Anwendung eingesetzt zu werden. Mit anderen Worten kann eine stationäre bzw. ortsfeste Plattform mit der erfindungsgemäßen elektrochemischen Zelle vorgesehen sein.

Gemäß einem Aspekt ist ein Verfahren zur Bereitstellung einer Gaskomponente angegeben. In einem Schritt erfolgt ein Zuführen eines Elektrolyts, welches beispielsweise ein Edukt aufweist, von einem Elektrolytaufnahmebereich in Hohlräume eines Elektrodenbereichs. In einem weiteren Schritt erfolgt ein Herstellen eines Kontakts zwischen dem Elektrolyt und einer Elektrodenoberfläche innerhalb der Hohlräume des Elektrodenbereichs zur Bildung einer Gaskomponente. In einem weiteren Schritt erfolgt ein Zuführen der Gaskomponente in den Gasaufnahmebereich. In einem weiteren Schritt erfolgt ein Beeinflussen eines Elektrolytverhaltens innerhalb der Hohlräume des Elektrodenbereichs. Es kann ein weiterer Schritt vorgesehen sein, um ein aktuelles Elektrolytverhalten im Elektrodenbereich zu messen, wobei das Messen beispielsweise ein Messen einer Füllung der Hohlräume mit Elektrolyt umfasst.

Gemäß einem Aspekt ist ein Verfahren zum Verbrauch einer Gaskomponente angegeben.

In einem Schritt erfolgt ein Zuführen einer Gaskomponente aus einem Gasaufnahmebereich in Hohlräume eines Elektrodenbereichs. In einem weiteren Schritt erfolgt ein Herstellen eines Kontakts zwischen einem Elektrolyt und einer Elektrodenoberfläche innerhalb der Hohlräume des Elektrodenbereichs zum Verbrauch der Gaskomponente. In einem weiteren Schritt erfolgt ein Abführen des Elektrolyts aus den Hohlräumen des Elektrodenbereichs in einen Elektrolytaufnahmebereich. In einem weiteren Schritt erfolgt ein Beeinflussen eines Elektrolytverhaltens innerhalb der Hohlräume des Elektrodenbereichs.

**Kurze Beschreibung der Figuren**

Fig. 1     zeigt eine elektrochemische Zelle zur Bereitstellung einer Gaskomponente gemäß einem Ausführungsbeispiel der Erfindung.

Fig. 2     zeigt eine Detailansicht eines Elektrolytaufnahmebereichs und eines Elektrodenbereichs der elektrochemischen Zelle von Fig. 1 gemäß einem Ausführungsbeispiel der Erfindung.

Fig. 3     zeigt eine schematische Darstellung von Druckverhältnissen in einer elektrochemischen Zelle gemäß einem Ausführungsbeispiel der Erfindung.

Fig. 4     zeigt ein Luftfahrzeug mit einer elektrochemischen Zelle gemäß einem Ausführungsbeispiel der Erfindung.

Fig. 5     zeigt ein Flussdiagramm für ein Verfahren zur Bereitstellung einer Gaskomponente gemäß einem Ausführungsbeispiel der Erfindung.

**Detaillierte Beschreibung beispielhafter Ausführungsformen**

Die Darstellungen in den Figuren sind schematisch und nicht maßstäblich. Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

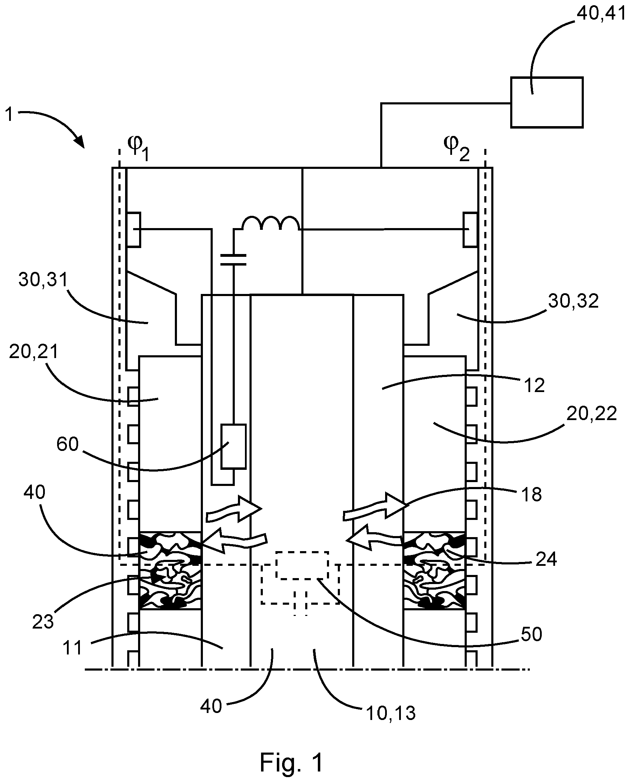

Fig. 1 zeigt eine elektrochemische Zelle 1 zur Bereitstellung einer Gaskomponente 31, 32. Die elektrochemische Zelle 1 umfasst einen Elektrolytaufnahmebereich 10, in dem ein Elektrolytvolumen gespeichert bzw. ein Elektrolyt 13 in Form einer flüssigen Elektrolytlösung gelagert ist. Der Elektrolyt 13 umfasst ein Edukt. Der Elektrolyt 13 kann dem Elektrolytaufnahmebereich 10 über eine hier nicht dargestellte Zufuhrleitung zugeführt werden. Die elektrochemische Zelle 1 umfasst ferner einen Elektrodenbereich 20. In dem in Fig. 1 dargestellten Beispiel sind zwei Elektrodenbereiche 20 vorgesehen, wobei die Elektrodenbereiche 20 durch eine erste Elektrode 21 und eine zweite Elektrode 22 gebildet werden. Die Elektroden 21, 22 weisen eine poröse Struktur auf. Das heißt sie umfassen eine Vielzahl von Poren, die hier auch als Hohlräume beschrieben werden. Die Elektroden 21, 22 des Elektrodenbereichs 20 definieren damit eine Kapillarstruktur.

Der Elektrolyt 13 aus dem Elektrolytaufnahmebereich 10 wird durch Kapillarkräfte in die Poren der Elektroden 21, 22 befördert. Dabei gelangt der Elektrolyt 13 durch Membranstrukturen 11, 12 hindurch. Die Membranstrukturen 11, 12 können dazu ausgeführt sein, einen Flüssigkeitsdurchgang, beispielsweise von Elektrolyt 13, zu den Elektroden 21, 22 hin zu ermöglichen. Die Membranstrukturen 11, 12 können auch dazu ausgeführt sein, einen Gasdurchgang, beispielsweise von im Elektrodenbereich 20 erzeugtem Gas, zum Elektrolytaufnahmebereich 10 zu verhindern.

Ein Kontakt zwischen dem Elektrolyt 13 und einer Elektrodenoberfläche innerhalb der Hohlräume des Elektrodenbereichs 20 führt beim Anlegen einer ausreichend großen Spannung zur Bildung der jeweiligen Gaskomponenten 31, 32, die jeweils einem Gasaufnahmebereich 30 zugeführt werden. Insbesondere wird in der ersten Elektrode 21 eine erste Gaskomponente 31 erzeugt und in der zweiten Elektrode 22 wird eine zweite Gaskomponente 32 erzeugt. Es sei verstanden, dass die elektrochemische Zelle 1 in dem in Fig. 1 dargestellten Beispiel zwei Elektroden 21, 22 aufweist und somit zwei Gaskomponenten 31, 32 jeweils getrennten Gasaufnahmebereichen 30 zugeführt werden.

Die elektrochemische Zelle 1 umfasst ferner ein Steuermittel 40, welches dazu ausgeführt ist, ein Elektrolytverhalten innerhalb der Hohlräume bzw. Poren des Elektrodenbereichs 20 zu beeinflussen. Dies kann beispielsweise das Beeinflussen einer Verteilung des Elektrolyts 13 in den Hohlräumen, einer Füllung 23, 24 der Hohlräume mit Elektrolyt 13 und/oder einer Benetzung der Elektrodenoberfläche mit Elektrolyt 13 in den Hohlräumen umfassen.

Um das Elektrolytverhalten in den Hohlräumen des Elektrodenbereichs 20 zu beeinflussen, können verschiedene Betriebseigenschaften erfasst bzw. gemessen werden, die dann als Grundlage für die Steuerung des Elektrolytverhaltens mittels des Steuermittels 40 dienen können. Insbesondere kann eine Erfassungseinheit 50 vorgesehen sein, die eine Elektrolytfüllung der Hohlräume des Elektrodenbereichs 20 bestimmen und ein entsprechendes Messsignal erzeugen kann. Diese Erfassungseinheit 50 ist beispielsweise eine Impedanzmesseinheit 50. Ferner kann eine weitere Erfassungseinheit 60, zum Beispiel ein Temperatursensor 50, vorgesehen sein, die eine Temperatur des Elektrolyts 13 bestimmen und ein entsprechendes Messsignal erzeugen kann. Durch die Erfassungseinheiten 50, 60 können Erkenntnisse über aktuelle Systemparameter der elektrochemischen Zelle 1 gewonnen werden.

Mit Hilfe von Impedanzspektroskopie lässt sich also über die Erfassungseinheit 50 während des Betriebs unter anderem die Porenfüllung messen. Denkbar ist auch eine Temperaturmessung über die weitere Erfassungseinheit 60 direkt im thermisch beanspruchtesten Bauteil, der Membranstruktur 11 bzw. 12, was neben der Steuerung oder Optimierung der Elektrolytversorgung auch die Effizienz in Bezug auf die maximale Betriebstemperatur verbessert. Eine Reduktion der Zellspannung kann theoretisch ca. 6 mV/K betragen und praktisch sind aufgrund weiterer Effekte ca. 10 mV/K möglich. Die erforderliche Schaltung kann beispielsweise in die Membranstruktur 11, 12 eingewebt oder auf sie aufgedruckt sein. Das Eingangssignal der Erfassungseinheit 50, 60 kann zur Erzeugung des Messsignals mit einem weißen Rauschen überlagert werden, was eine aussagekräftige Fouriertransformation ermöglicht. Es können jedoch auch diskontinuierliche Verfahren, wie Sprungantworten verwendet werden, um Anforderungen an die Stromquelle der elektrochemischen Zelle 1 gering zu halten.

Die erzeugten Messsignale werden von den Erfassungseinheiten 50, 60 an das Steuermittel 40 übermittelt, welches in diesem Fall eine Steuerung 41 mit einer Prozessoreinheit zur Verarbeitung der Messsignale ist. Basierend auf den verarbeiteten Messsignalen kann das Steuermittel 40 anschließend aktiv das Elektrolytverhalten innerhalb der Hohlräume des Elektrodenbereichs 20 beeinflussen. Dieses Beeinflussen kann, wie oben beschreiben, beispielsweise das Steuern einer Druckdifferenz zwischen dem Elektrolytaufnahmebereich 10 und dem Gasaufnahmebereich 30 umfassen.

Die Erzeugung einer Druckdifferenz zwischen dem Elektrolytaufnahmebereich 10 und dem Gasaufnahmebereich 30 kann durch einen Druckaufbau im Elektrolytaufnahmebereich 10 erfolgen, beispielsweise mittels einer nicht dargestellten Pumpe. Ferner kann die Erzeugung einer Druckdifferenz zwischen dem Elektrolytaufnahmebereich 10 und dem Gasaufnahmebereich 30 durch einen Druckaufbau oder eine Druckreduzierung im Gasaufnahmebereich 10 erfolgen, beispielsweise mittels einer nicht dargestellten Druckregelung. Diese Druckregelung kann dabei mit einem Druckregelventil bzw. Ablassregelventil (nicht dargestellt) gesteuert werden, wodurch ein Ablassen oder Nichtablassen der Gaskomponente 31, 32 aus dem Gasaufnahmebereich 30 reguliert wird.

Die in Fig. 1 dargestellte elektrochemische Zelle 1 kann eine alkalische und eine saure Elektrolyse bereitstellen. Bei der alkalischen Elektrolyse kann sauerstoffseitig Wasser bzw. Elektrolyt anfallen, welches zurückgeführt werden kann, um die Gefahr von Elektrolytaustrag in den Gasaufnahmebereich 30 zu reduzieren und auch nachfolgende, hier nicht dargestellte Systeme zu entlasten. Fig. 1 zeigt anhand des Pfeils 18 beispielhaft den Wasser- bzw. Elektrolytfluss 18 für eine alkalische Zelle. Für das oben beschriebene Steuern des Elektrolytverhaltens in den Poren, insbesondere das Steuern der Porenfüllung, kann daher die Regelung beider Gaszu-Elektrolyt-Differenzdrücke identisch sein. Dies muss jedoch nicht unbedingt der Fall sein.

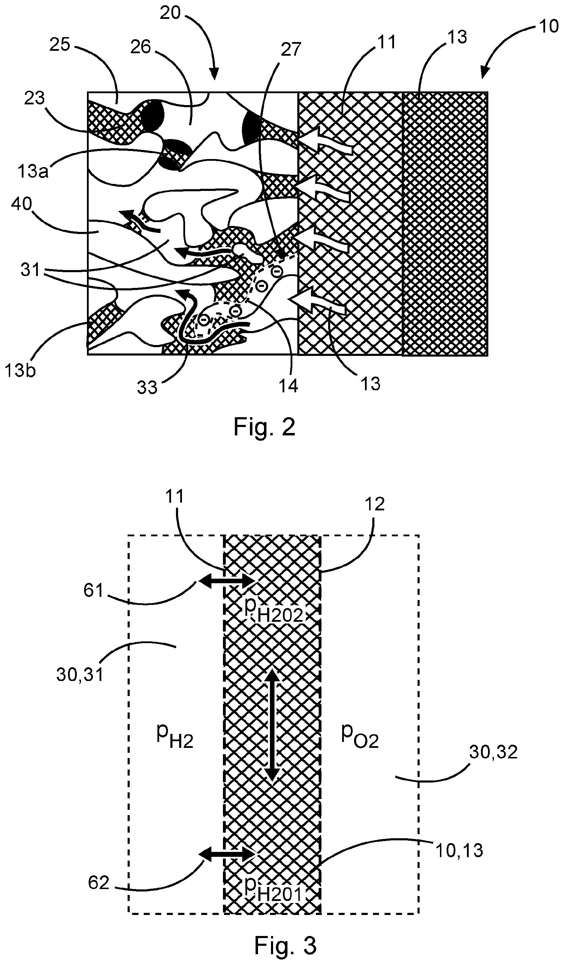

Fig. 2 zeigt eine Detailansicht eines Elektrolytaufnahmebereichs 10 und eines Elektrodenbereichs 20 der elektrochemischen Zelle 1 von Fig. 1. Die Bewegungsrichtung des Elektrolyts 13 ist durch Pfeile gekennzeichnet. Wie zu erkennen ist, tritt der Elektrolyt 13 ausgehend vom Elektrolytaufnahmebereich 10 durch die Membranstruktur 11 hindurch in den Elektrodenbereich 20 ein. Die Bewegung des Elektrolyts 13 kann durch Kapillarkräfte bewirkt werden, welche den Elektrolyt 13 in die Hohlräume 26 bzw. Poren 26 des Elektrodenbereichs 20 hineinziehen. Wie ebenfalls zu erkennen ist, durchziehen die Poren 26 bzw. Hohlräume 26 den Elektrodenbereich 20, sodass ein Stofftransport zwischen Elektrolytaufnahmebereich 10 und dem hier nicht dargestellten Gasaufnahmebereich 30 möglich ist. Der Elektrodenbereich 20 umfasst ferner das Elektrodenmaterial 25, welches wiederum die Hohlräume 26 definiert. Die Grenzfläche zwischen dem Elektrodenmaterial 25 und den Hohlräumen 26 wird durch die Elektrodenoberfläche 27 gebildet.

In Fig. 2 ist zu erkennen, dass ein Teil der Elektrodenoberfläche 27 mit Elektrolyt 13 benetzt ist und ein anderer Teil der Elektrodenoberfläche 27 nicht mit Elektrolyt 13 benetzt ist. Ein Kontakt 14 zwischen der Elektrodenoberfläche 27 und dem Elektrolyt 13 erzeugt die Gaskomponente 31, welche sich nach ihrer Erzeugung ebenfalls in den Hohlräumen befindet und in den nicht dargestellten Gasaufnahmebereich 30 (vgl. Fig. 1) abgeführt wird. Die Pfeile 33 kennzeichnen die Bewegungsrichtung der Gaskomponente 31.

Bei Anlegen einer ausreichenden Spannung wird also an der Elektrodenoberfläche 27 mit Elektrolytkontakt 14 die Gaskomponente 31 erzeugt. Die Gaskomponente 31 wird durch die Porenstruktur 26 zum hier nicht gezeigten Gasaufnahmebereich 30 abgeführt. Die Gasabfuhr spielt eine wesentliche Rolle für die Effizienz der elektrochemischen Zelle 1. Dabei ist es von Vorteil, dass die Bewegung 33 der Gaskomponente 31 durch die Hohlräume 26 hindurch möglichst wenig durch vorhandenen Elektrolyt 13 blockiert ist. Grundsätzlich ist damit das Konzept des trockenen Gasraums gegenüber einem gefluteten im Vorteil. Andererseits ist es jedoch erforderlich, dass ausreichend Elektrodenoberfläche 27 mit Elektrolyt 13 benetzt ist, damit die Gaskomponente 31 überhaupt in ausreichendem Maße hergestellt werden kann. Der Zusammenhang zwischen Porenfüllung 23 und aktiver, das heißt benetzter Elektrodenoberfläche 27 ist dabei von einem Benetzungswinkel des Elektrolyts 13 zur Elektrodenoberfläche 27 abhängig. Dies ist in Fig. 2 erkennbar, wo beispielhaft Elektrolytansammlungen mit konvexem Benetzungswinkel 13a (entspricht einem vergleichsweise großen Benetzungswinkel) und Elektrolytansammlungen mit konkavem Benetzungswinkel 13b (entspricht einem vergleichsweise kleinen Benetzungswinkel) gezeigt sind. Zur Verbesserung der Effizienz ist es erforderlich, die benetzte Elektrodenoberfläche 27 zu maximieren, ohne dabei auf Hohlräume 26 zur Gasabfuhr bzw. Gaszufuhr zu verzichten. Der zum Konzept bereits erforderliche hydrophile Charakter des Elektrodenbereichs 20 hat konkave Flüssigkeitsoberflächen 13b zur Folge, das heißt bei unendlich kleinem Kontaktwinkel wäre eine perfekte Benetzung bei gleichzeitig ungehinderter Gasabfuhr bzw. Gaszufuhr möglich. Die Porenfüllung 23 kann sich bereits bei Variation um wenige mbar stark verändern. Geschuldet ist dies zusätzlich auch dem Flusswiderstand der Membranstruktur 11. Der Flusswiderstand kann beispielsweise durch das Steuermittel 40 eingestellt werden, um beispielsweise eine gleichmäßigere und homogenere Porenfüllung 23 zu erzeugen. Der Flusswiderstand kann wiederum über die oben bereits erläuterte aktive Druckregulierung erfolgen. Bei senkrechter Ausrichtung der Zelle kann die Druckregulierung in Abhängigkeit der Füllhöhe des Wasser- bzw. Elektrolytraums 10 erfolgen, also in Abhängigkeit des hydrostatischen Drucks (vgl. Fig. 3). Gleichermaßen lässt sich diese Druckregulierung auch auf andere Ausrichtungen übertragen. Insbesondere kann vorgesehen sein, dass zellspezifische Druckverhältnisse und Porenfüllungen eingestellt bzw. gesteuert werden, um auf diese Weise das Elektrolytverhalten innerhalb des Elektrodenbereichs 20 zu beeinflussen.

Generell kann eine Beeinflussung des Elektrolytverhaltens durch Auslegung des Elektrodenbereichs 20 bzw. der Elektrode 21, der Membranstruktur 11 und einer Wasserverteilschicht erfolgen.

Eine Beeinflussung der Wasserverteilschicht und damit der Porenfüllung im Elektrodenbereich 20 kann durch eine Material- und/oder Komponentenauswahl erfolgen. Dabei können Parameter wie Dicke, Porosität, Porengröße, Material oder Oberflächenbeschaffenheit des Elektrodenmaterials im Elektrodenbereich 20 oder des Membranmaterials in der Membranstruktur 11 angepasst werden. Es kann vorgesehen sein, dass die Materialbeschaffenheit eine Inhomogenität aufweist. Zum Beispiel kann vorgesehen sein, dass Porosität nicht gleichmäßig über Fläche verteilt ist.

In Fig. 2 ist eine sehr unterschiedliche Porenfüllung 23 über die Elektrodenoberfläche 27 dargestellt. Dies führt zu einer ungleichmäßigen Stromdichteverteilung, was den maximalen Betriebspunkt, wie auch Effizienz der elektrochemischen Zelle 1 einschränken kann. Berücksichtigt ist in diesem Beispiel lediglich der Einfluss des hydrostatischen Drucks (vgl. auch Fig. 3). Dies gilt auch für alle Strömungsverluste, die innerhalb des Elektrolytbereichs 10 bzw. der Wasserverteilschicht aufgrund beispielsweise einer Matrix entstehen. Durch die hierin beschriebene elektrochemische Zelle 1 ist eine gezielte Auslegung hin zu einer homogenen Porenfüllung 23, das heißt eine homogene Elektrolytverteilung über das Hohlraumvolumen 26 des Elektrodenbereichs 20, möglich. Die homogene Porenfüllung 23 wird dabei durch das hierin beschriebene Steuermittel 40 bewirkt, welches wie beschrieben als passives Steuermittel 40 oder aber als aktives Steuermittel 40 wirken kann. Es kann also beispielsweise eine aktive bzw. passive Anpassung der Strömungswiderstande innerhalb des Elektrodenbereichs 20 erfolgen. Ebenso kann eine Einstellung der Porengrößen erfolgen oder eine Verteilung der Porengrößen innerhalb des Elektrodenbereichs 20 eingestellt werden, um eine homogenere Verteilung des Elektrolyts 13 in den Hohlräumen 26 und damit eine homogenere Porenfüllung 23 zu erreichen. Darüber hinaus kann das Steuermittel 40 auch die Verteilung der partiellen Kontaktflächen 14 zwischen Elektrodenoberfläche 27 und Elektrolyt 13 umfassen, entweder zusammen mit einer gleichzeitigen Einstellung der Porenfüllung 23 oder ohne gleichzeitige Einstellung der Porenfüllung 23. Das heißt, es kann sich hierbei auch um eine druckunabhängige Optimierung handeln. Das Steuermittel 40 kann auch eine Anpassung der Porenfüllung 23 über die Kontaktwinkel bzw. Benetzungswinkel 13a, 13b bewirken. Hierzu können Additive als Steuermittel 40 zum Elektrolyt 13 hinzugefügt werden, welche die Benetzungseigenschaften des Elektrolyts 13 auf der Elektrodenoberfläche 27 verbessern. Ferner kann die Materialbeschaffenheit der Oberfläche 27 bzw. eine Oberflächenstrukturierung für die Elektrodenoberfläche 27 eingestellt werden, welche ebenfalls die Benetzungseigenschaften des Elektrolyts 13 auf der Elektrodenoberfläche 27 verbessern können.

Fig. 3 zeigt eine schematische Darstellung von Druckverhältnissen in einer beispielhaften elektrochemischen Zelle 1. Die linksseitige Elektrode 31 definiert eine Wasserstoffseite und die rechtsseitige Elektrode 32 definiert eine Sauerstoffseite. Die hier gezeigte senkrechte Ausrichtung der Elektroden 31, 32 führt aufgrund der Hydrostatik dazu, dass der Elektrolyt 13 im unteren Bereich der Elektroden 31, 32 mit einem größeren Druck $p_{H2O,1}$ in den Elektrodenbereich 30 zugeführt wird und im oberen Bereich mit einem niedrigeren Druck $p_{H2O,2}$ in den Elektrodenbereich 30 zugeführt wird. Der Differenzdruck 61 zwischen dem Elektrolytaufnahmebereich 10 und dem nicht dargestellten Gasaufnahmebereich ist im oberen Bereich der Elektroden 31, 32 niedriger als der Differenzdruck 62 zwischen dem Elektrolytaufnahmebereich 10 und dem nicht dargestellten Gasaufnahmebereich im oberen Bereich der Elektroden 31, 32. Durch das nicht dargestellte Steuermittel 40 kann eine passive Drucksteuerung erfolgen, so dass eine gleichmäßigere Druckverteilung, das heißt im oberen und unteren Elektrodenbereich etwa gleiche Differenzdrücke 61, 62 herrschen, sodass eine möglichst homogene Hohlraumfüllung erfolgen kann. Dies kann beispielsweise über eine ortsabhängige Einstellung des Druckverlusts bei Elektrolytfluss durch die Membranstruktur 11, 12 erfolgen, sodass der Elektrolytfluss durch die Membran 11, 12 über die gesamte Fläche gleich ist.

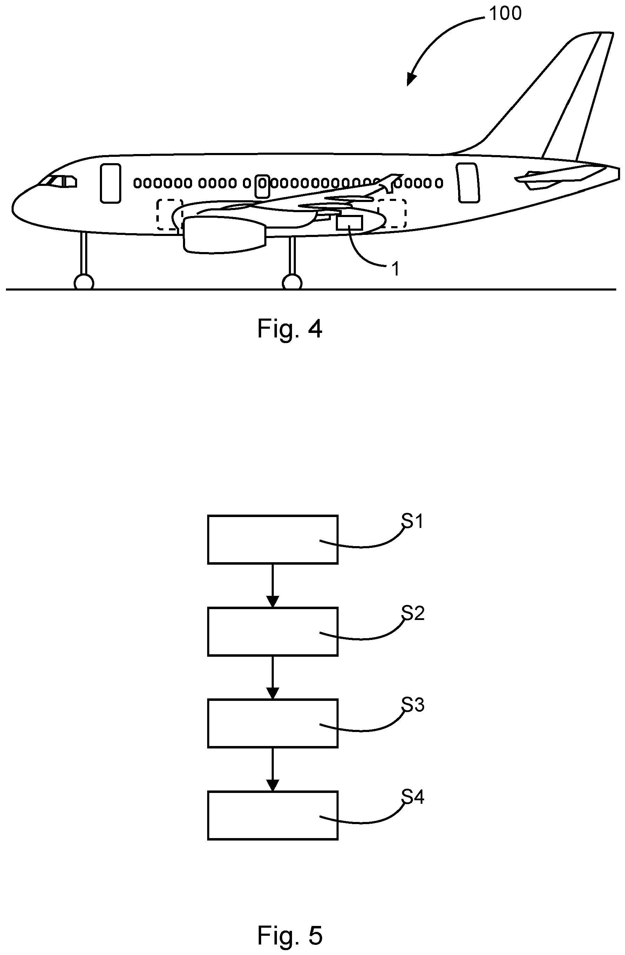

Fig. 4 zeigt ein Luftfahrzeug 100, insbesondere ein Flugzeug mit der elektrochemischen Zelle 1 von Fig. 1. Die elektrochemische Zelle 1 kann dabei einen Teil eines Antriebssystems des Luftfahrzeugs 10 bilden, insbesondere das Antriebssystem mit einem Treibstoff, beispielsweise Wasserstoff, versorgen.

Fig. 5 zeigt ein Flussdiagramm für ein Verfahren zur Bereitstellung einer Gaskomponente 31, 32. In einem Schritt S1 des Verfahrens erfolgt ein Zuführen eines Elektrolyts 13 von einem Elektrolytaufnahmebereich 10 in Hohlräume 26 eines Elektrodenbereichs 20. In einem weiteren Schritt S2 erfolgt ein Herstellen eines Kontakts 14 zwischen dem Elektrolyt 13 und einer Elektrodenoberfläche 27 innerhalb der Hohlräume 26 des Elektrodenbereichs 20 zur Bildung einer Gaskomponente 31, 32. In einem weiteren Schritt S3 erfolgt ein Zuführen der Gaskomponente 31, 32 in den Gasaufnahmebereich 30. In einem weiteren Schritt S4 erfolgt ein Beeinflussen eines Elektrolytverhaltens innerhalb der Hohlräume 26 des Elektrodenbereichs 20. In einem weiteren optionalen Schritt kann das Erfassen von Systemparametern erfolgen, um Messignale zu erzeugen, welche anschließend zum Beeinflussen des Elektrolytverhaltens verwendet werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Elektrochemische Zelle (1) zur Bereitstellung oder zum Verbrauch einer Gaskomponente (31, 32) aufweisend:

   einen Elektrolytaufnahmebereich (10);
   einen Elektrodenbereich (20);
   einen Gasaufnahmebereich (30);
   wobei der Elektrolytaufnahmebereich (10) dazu ausgeführt ist, einen Elektrolyt (13) aufzunehmen, sodass der Elektrolyt (13) dem Elektrodenbereich (20) zuführbar ist oder aus dem Elektrodenbereich (20) abführbar ist;
   wobei der Elektrodenbereich (20) Hohlräume (26) aufweist, die dazu ausgeführt sind, aus dem Elektrolytaufnahmebereich (10) zugeführten Elektrolyt (13) oder in den Elektrolytaufnahmebereich (10) abführbaren Elektrolyt (13) aufzunehmen;
   wobei ein Kontakt (14) zwischen dem Elektrolyt (13) und einer Elektrodenoberfläche (27) innerhalb der Hohlräume (26) des Elektrodenbereichs (20) zur Bildung einer dem Gasaufnahmebereich (30) zuführbaren Gaskomponente (31, 32) führt oder zum Verbrauch einer aus dem Gasaufnahmebereich (30) abgeführten Gaskomponente (31, 32) führt;
   ein Steuermittel (40), welches dazu ausgeführt ist, ein Elektrolytverhalten innerhalb der Hohlräume (26) des Elektrodenbereichs (20) zu beeinflussen.

2. Elektrochemische Zelle (1) nach Anspruch 1, wobei das Elektrolytverhalten mit einer Füllung (23, 24) der Hohlräume (26) des Elektrodenbereichs (20) mit dem Elektrolyt (13) korrespondiert.

3. Elektrochemische Zelle (1) nach einem der vorhergehenden Ansprüche,
   wobei das Steuermittel (40) ein passives Steuermittel ist, das mit einer Materialbeschaffenheit der Elektrodenoberfläche (27) innerhalb der Hohlräume (26) des Elektrodenbereichs (20) korrespondiert.

4. Elektrochemische Zelle (1) nach einem der vorhergehenden Ansprüche,
   wobei das Steuermittel (40) ein aktives Steuermittel ist, das einen Druckunterschied (61, 62) zwischen dem Elektrolytaufnahmebereich (10) und dem Gasaufnahmebereich (30) reguliert.

5. Elektrochemische Zelle (1) nach einem der vorhergehenden Ansprüche,
   wobei das Steuermittel (40) ein Additiv ist, das zusammen mit dem Elektrolyt (13) dem Elektrodenbereich (20) zuführbar ist oder zusammen mit dem Elektrolyt (13) aus dem Elektrodenbereich (20) abführbar ist.

6. Elektrochemische Zelle (1) nach einem der vorhergehenden Ansprüche, ferner aufweisend:
   eine Membranstruktur (11, 12), welche zwischen dem Elektrolytaufnahmebereich (10) und dem Elektrodenbereich (20) angeordnet ist und dazu ausgeführt ist, den Elektrolyt (13) vom Elektrolytaufnahmebereich (10) zum Elektrodenbereich (20) zu transportieren oder den Elektrolyt (13) vom Elektrodenbereich (20) zum Elektrolytaufnahmebereich (10) zu transportieren.

7. Elektrochemische Zelle (1) nach einem der vorhergehenden Ansprüche, ferner aufweisend:

   eine Erfassungseinheit (50, 60);
   wobei die Erfassungseinheit (50) dazu ausgeführt ist, eine Elektrolytfüllung der Hohlräume (26) des Elektrodenbereichs (20) zu bestimmen und ein entsprechendes Messsignal zu erzeugen; und/oder
   wobei die Erfassungseinheit (60) dazu ausgeführt ist, eine Temperatur des Elektrolyts (13) zu bestimmen und ein entsprechendes Messsignal zu erzeugen.

8. Elektrochemische Zelle (1) nach Anspruch 7, wobei das Steuermittel (40) dazu ausgeführt ist, das Elektrolytverhalten innerhalb der Hohlräume (26) des Elektrodenbereichs (20) basierend auf dem von der Erfassungseinheit (50, 60) erzeugten Messsignal zu beeinflussen.

9. Fahrzeug (100) mit einer elektrochemischen Zelle (1) zur Bereitstellung oder zum Verbrauch einer Gaskomponente (31, 32) nach einem der vorhergehenden Ansprüche.

10. Verfahren zur Bereitstellung einer Gaskomponente (31, 32), aufweisend:

   Zuführen eines Elektrolyts (13) von einem Elektrolytaufnahmebereich (10) in Hohlräume (26) eines Elektrodenbereichs (20, S1);
   Herstellen eines Kontakts (14) zwischen dem Elektrolyt (13) und einer Elektrodenoberfläche (27) innerhalb der Hohlräume (26) des Elektrodenbereichs (20) zur Bildung einer Gaskomponente (31, 32, S2);
   Zuführen der Gaskomponente (31, 32) in den Gasaufnahmebereich (30, S3);
   Beeinflussen eines Elektrolytverhaltens innerhalb der Hohlräume (26) des Elektrodenbereichs (20, S4).

11. Verfahren zum Verbrauch einer Gaskomponente (31, 32), aufweisend:

   Zuführen einer Gaskomponente (31, 32) aus einem Gasaufnahmebereich (30) in Hohlräume (26) eines Elektrodenbereichs (20, S1);
   Herstellen eines Kontakts (14) zwischen einem Elektrolyt (13) und einer Elektrodenoberfläche (27) innerhalb der Hohlräume (26) des Elektrodenbereichs (20) zum Verbrauch der Gaskomponente (31, 32, S2);
   Abführen des Elektrolyts (13) aus den Hohlräumen (26) des Elektrodenbereichs (20) in einen Elektrolytaufnahmebereich (10, S3);
   Beeinflussen eines Elektrolytverhaltens innerhalb der Hohlräume (26) des Elektrodenbereichs (20, S4).

Fig. 1

Fig. 2

Fig. 3

Fig. 4

Fig. 5

Europäisches Patentamt
European Patent Office
Office européen des brevets

**EUROPÄISCHER RECHERCHENBERICHT**

**Nummer der Anmeldung**

**EP 22 15 6854**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | US 2013/313126 A1 (RAATSCHEN WILLIGERT [DE] ET AL) 28. November 2013 (2013-11-28) <br> * Ansprüche 2, 10-12 * <br> * Abbildungen 1, 4 * <br> * Absätze [0028] – [0040], [0043] – [0045] * <br> ----- | 1-11 | INV. <br> H01M8/04313 <br> H01M8/04694 <br> C25B1/04 <br> C25B9/13 <br> C25B11/031 <br> C25B15/023 |
| X | DE 10 2016 217989 A1 (SIEMENS AG [DE]) 22. März 2018 (2018-03-22) <br> * Ansprüche 1, 5-10, 12, 13, 15 * <br> * Absätze [0023] – [0026], [0043] – [0058], [0073] – [0091] * <br> ----- | 1-11 | C25B15/027 <br> C25B15/08 <br><br> ADD. <br> H01M8/083 <br> H01M8/18 |
| X | EP 3 188 296 A1 (ELECTRO POWER SYSTEMS MFG S R L [IT]) 5. Juli 2017 (2017-07-05) <br> * Ansprüche 1, 6, 7 * <br> * Abbildung 1 * <br> * Absätze [0024] – [0066] * <br> ----- | 1-11 | |
| X | WO 2014/096793 A1 (AFC ENERGY PLC [GB]) 26. Juni 2014 (2014-06-26) <br> * Ansprüche 1-6, 14, 15 * <br> * Abbildungen 1, 2 * <br> * Seite 7, Absatz 1 – Seite 9, Absatz 5 * <br> * Seite 10, Absatz 3 – Seite 12, Absatz 4 * <br> ----- | 1-11 | **RECHERCHIERTE SACHGEBIETE (IPC)** <br><br> H01M <br> C25B |

Der vorliegende Recherchenbericht wurde für alle Patentansprüche erstellt

| Recherchenort | Abschlußdatum der Recherche | Prüfer |
|---|---|---|
| München | 9. August 2022 | Perednis, Dainius |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 15 6854

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-08-2022

| Im Recherchenbericht angeführtes Patentdokument | Datum der Veröffentlichung | Mitglied(er) der Patentfamilie | Datum der Veröffentlichung |
|---|---|---|---|
| US 2013313126 A1 | 28-11-2013 | CA 2819103 A1 | 14-06-2012 |
| | | EP 2463407 A1 | 13-06-2012 |
| | | ES 2699091 T3 | 07-02-2019 |
| | | JP 2014502313 A | 30-01-2014 |
| | | US 2013313126 A1 | 28-11-2013 |
| | | WO 2012076147 A1 | 14-06-2012 |
| | | ZA 201303781 B | 26-03-2014 |
| DE 102016217989 A1 | 22-03-2018 | AU 2017332322 A1 | 07-03-2019 |
| | | CN 109715861 A | 03-05-2019 |
| | | DE 102016217989 A1 | 22-03-2018 |
| | | EP 3475469 A1 | 01-05-2019 |
| | | US 2019226105 A1 | 25-07-2019 |
| | | WO 2018054646 A1 | 29-03-2018 |
| EP 3188296 A1 | 05-07-2017 | KEINE | |
| WO 2014096793 A1 | 26-06-2014 | GB 2523045 A | 12-08-2015 |
| | | TW 201440306 A | 16-10-2014 |
| | | WO 2014096793 A1 | 26-06-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2463407 B1

- US 20130313126 A1